# EUROPÄISCHE PATENTANMELDUNG

(11) **EP 2 727 858 A1**
(43) Veröffentlichungstag der Anmeldung: **07.05.2014**
(21) Anmeldenummer: 12190903.0
(22) Anmeldetag: 31.10.2012
(51) Int. Cl.: B65G 1/08

(54) **Rollenbahn mit Leerplatten-Rückführung**

(71) Anmelder: Euroroll Dipl. Ing. K.H. Beckmann GmbH & Co. KG, 59387 Ascheberg-Herbern (DE)
(72) Erfinder: Kallus, Waldemar, 59067 Hamm (DE)
(74) Vertreter: Schwabe - Sandmair - Marx

(57) **Zusammenfassung**

Rollenbahn mit Leerpalettenrückführung, umfassend:
a) eine Zuführstation (10), die ein Zuführstationsgestell (1a, 11) und relativ zu dem Zuführstationsgestell (1a, 11) drehbare Transportrollen (12) aufweist, wobei die Transportrollen (12) eine erste Transportebene (13) definieren,
b) eine Entnahmestation (20), die ein Entnahmestationsgestell (1b) und einen Schwenkrahmen (21), der eine zweite Transportebene (23) bildet, aufweist, wobei der Schwenkrahmen (21) relativ zu dem Entnahmestationsgestell (1b) um eine insbesondere parallel zu der zweiten Transportebene (23) verlaufende Schwenkachse (25) zwischen einer Zuführposition und einer Rückführposition hin und her schwenkbar ist, und
c) eine Rückführstation (30), die eine dritte Transportebene (33) aufweist,
d) wobei eine Palette (P) aus der Zuführstation (10) in die Entnahmestation (20) entlang der ersten und zweiten Transportebene (13, 23) transportierbar ist, wenn der Schwenkrahmen (21) in der Zuführposition ist, und aus der Entnahmestation (20) in die Rückführstation (30) entlang der zweiten und dritten Transportebene (23, 33) transportierbar ist, wenn der Schwenkrahmen (21) in der Rückführposition ist, wobei die zweite Transportebene (23) gegenüber der Horizontalen so stark geneigt ist, dass die Palette (P) von der Entnahmestation (20) mittels Schwerkraft in Richtung Rückführstation (30) transportiert wird,
e) ferner umfassend einen von einer Bedienperson greifbaren Betätigungshebel (44), der relativ zu dem Schwenkrahmen (21) schwenkbar und mit einem Getriebe (41, 43, 46) verbunden ist, welches die Schwenkbewegung des Betätigungshebels (44) in eine Bewegung umwandelt, welche die Schwenkbewegung des Schwenkrahmens (21) bewirkt.

## Beschreibung

Die Erfindung betrifft eine Rollenbahn, insbesondere eine Schwerkraftrollenbahn mit einer Leerpaletten-Rückführung. Eine solche Rollenbahn wird dazu eingesetzt, eine bestückte Palette in einer Entnahmestation zu entkommissionieren und die entkommissionierte Palette für das Bedienpersonal möglichst komfortabel aus der Entnahmestation abzuführen.

Aus dem Stand der Technik sind Rollenbahnen mit Leerpaletten-Rückführung grundsätzlich bekannt. Die WO 98/13280 A1 zeigt z. B. eine Vorrichtung für den Durchlauf von Paletten in einem Regallager, wobei eine Palette aus dem Regal in eine Kommissionierstation transportiert wird, wobei durch Verschwenken der Kommissionierstation die entleerte Palette in eine Rückgabestation überführt wird. Die Rückgabestation ist mit der Kommissionierstation so verbunden, dass die Rückgabestation beim Verschwenken der Kommisionierstation entgegengesetzt zur Kommissionierstation verschwenkt wird.

Es ist eine Aufgabe der Erfindung, eine Rollenbahn mit Leerpaletten-Rückführung anzugeben, welche einfach aufgebaut und somit preisgünstig, und kraftsparend bedienbar ist.

Die Aufgabe wird mit dem Gegenstand des Anspruchs 1 gelöst. Vorteilhafte Weiterentwicklungen ergeben sich aus den abhängigen Ansprüchen, der Beschreibung und den Figuren.

Die Erfindung geht von einer Rollenbahn aus, die angepasst ist, leere Paletten zurückzuführen. Unter Paletten werden nicht nur Paletten im engeren Sinne wie z. B. Europaletten verstanden, sondern auch andere Transportgut tragende Mittel oder Behälter.

Die Rollenbahn umfasst eine Zuführstation, eine Entnahmestation und eine Rückführstation. Die Zuführstation dient dazu, eine beladene Palette zu lagern oder zwischenzulagern. Die

Entnahmestation dient dazu, die beladene Palette zu entladen oder entkommissionieren, was in der Regel durch eine oder mehrere Personen erfolgt. Die Palette ist von der Zuführstation zur Entnahmestation transportierbar.

Die Rückführstation dient dazu, die in der Entnahmestation entkommissionierte oder entladene Palette aufzunehmen, wobei die entkommissionierte oder entladene Palette von der Entnahmestation zur Rückführstation transportierbar ist.

Die Zuführstation weist einen Zuführstationsgestell, die Entnahmestation ein Entnahmestationsgestell und die Rückführstation ein Rückführstationsgestell auf. Bei diesen Gestellen kann es sich jeweils um separate Gestelle oder um Abschnitte eines gemeinsamen Gestells handeln.

Zur Bildung einer Rollenbahn weist die Zuführstation relativ zu dem Zuführstationsgestell drehbare Transportrollen auf. Das Zuführstationsgestell kann mindestens eine Schiene aufweisen, an der die Transportrollen drehbar befestigt sind. Eine oder mehrere der Transportrollen können sogenannte Bremsrollen sein, welche bei Drehung eine über die normale Reibung hinausgehende Bremswirkung entfalten. Die anderen der Transportrollen können z. B. ungebremste Transportrollen sein. Die Transportrollen definieren eine erste Transportebene. D. h., dass auf den jeweiligen Umfang der Transportrollen eine Palette aufliegen kann. Z. B. kann die gemeinsame, an die Umfänge der Transportrollen tangierende Ebene die Transportebene bilden.

Die mindestens eine Schiene, welche die Transportrollen, die auch als Tragrollen bzw. Bremstragrollen bezeichnet werden können, drehbar lagert, ist vorzugsweise unbeweglich mit dem Zuführstationsgestell verbunden, wie z. B. verschraubt.

In bevorzugten Ausführungen ist die Transportebene der Zuführstation in Bezug auf die Horizontale geneigt, wie z. B. um 2° bis 5°, insbesondere zur Entnahmestation hin abfallend, so dass eine Schwerkraftrollenbahn gebildet wird. Bei einer Schwerkraftrollenbahn wird das zu transportierende Gut, wie z. B. hier die Palette, durch die Schwerkraft hangabwärts gefördert, wie z. B. zu der Entnahmestation hin. Da der Transport mittels Schwerkraft erfolgt, ist unter einer Horizontalen eine auf den Schwerkraftvektor senkrecht stehende Gerade oder normal stehende Ebene zu verstehen.

Die Entnahmestation umfasst einen Schwenkrahmen, der eine zweite Transportebene bildet. Bevorzugt sind an dem Schwenkrahmen mehrere Transportrollen drehbar befestigt, wobei die gemeinsame, an die Umfänge der Transportrollen tangierende Ebene die zweite Transportebene bildet. Der Schwenkrahmen kann mindestens eine Schiene, wie z. B. zwei Schienen umfassen, an der die Transportrolle drehbar befestigt ist. Die zweite Transportebene kann alternativ durch eine Gleitschiene vorgegeben werden, an der die Palette entlanggleitet, d.h. nicht abrollt.

Der Schwenkrahmen ist relativ zu dem Entnahmegestell um eine insbesondere parallel zu der zweiten Transportebene und quer, insbesondere senkrecht zur Transportrichtung verlaufende Schwenkachse zwischen einer Zuführposition und einer Rückführposition hin und her schwenkbar. In der Zuführposition ist der Schwenkrahmen so ausgerichtet, dass die Palette von der Zuführstation in die Entnahmestation entlang der ersten und zweiten Transportebene transportierbar ist. Die erste Transportebene ist hierbei in Bezug auf die zweite Transportebene so ausgerichtet, dass ein sicherer Transport möglich ist, was nicht notwendigerweise bedeutet, dass die erste Transportebene und die zweite Transportebene in einer gemeinsamen Ebene liegen, was zwar bevorzugt ist, sondern auch dass die erste und zweite Transportebene zueinander um ein geringes Maß versetzt sind oder winklig aufeinander stehen, solange der Transport der Palette sicher möglich ist.

Wenn der Schwenkrahmen in der Zuführposition ist, kann die zweite Transportebene z. B. eine Horizontale bilden, oder gegenüber der Horizontalen geneigt sein, wie z. B. um 2 bis 5°, insbesondere zu der Zuführstation hin ansteigend.

In der Rückführposition ist der Schwenkrahmen und somit auch die zweite Transportebene gegenüber der Horizontalen geneigt, insbesondere in die entgegengesetzte Richtung wie die erste Transportebene oder die zweite Transportebene, wenn sich der Schwenkrahmen in der Zuführposition befindet.

Die Rückführstation weist eine dritte Transportebene auf. Die dritte Transportebene kann z. B. durch eine Schwerkraftrollenbahn oder vorzugsweise durch mindestens eine, insbesondere zwei oder drei Gleitschienen gebildet werden, die unbeweglich an dem Rückführstationsgestell angeordnet sind. Die dritte Transportebene ist gegenüber der Horizontalen geneigt und steigt in Bezug auf die Horizontale zu der Entnahmestation hin an. Die Palette ist aus der Entnahmestation in die Rückführstation entlang der zweiten und dritten Transportebene transportierbar, wenn der Schwenkrahmen in der Rückführposition ist, in der die zweite Transportebene gegenüber der Horizontalen so stark geneigt ist, dass die Palette von der Entnahmestation mittels Schwerkraft in Richtung Rückführstation transportiert wird. Die zweite und dritte Transportebene müssen nicht notwendigerweise in einer gemeinsamen Ebene angeordnet sein, sondern können auch leicht versetzt oder winklig zueinander angeordnet sein, solange die Palette sicher aus der Entnahmestation in die Rückführstation transportierbar ist. Die Rückführstation ist vorzugsweise unterhalb der Zuführstation angeordnet und/oder die Transportrichtung aus der Entnahmestation in die Rückführstation ist spitzwinklig und/oder entgegengesetzt zu der Transportrichtung der Palette aus der Zuführstation in die Entnahmestation.

Z. B. kann ein Schwenkanschlag vorgesehen sein, an den der Schwenkrahmen anschlägt, wenn er in die Rückführposition geschwenkt wird, und der insbesondere die Rückführposition für den Schwenkrahmen definiert.

Insbesondere weist die Rollenbahn einen von einer Bedienperson greifbaren Betätigungshebel auf, der relativ zu dem Schwenkrahmen schwenkbar und mit einem Getriebe verbunden ist, welches die Schwenkbewegung des Schwenkhebels in eine Bewegung umwandelt, welche die Schwenkbewegung des Schwenkrahmens bewirkt. Bei der Vorrichtung aus der WO 98/13280 A1 ist der Betätigungshebel starr mit dem Schwenkrahmen verbunden, so dass der Schwenkrahmen die Schwenkbewegung des Betätigungshebels mitmacht. Dadurch, dass der Betätigungshebel der Erfindung relativ zu dem Schwenkrahmen schwenkbar ist, kann der Betätigungshebel z. B. einen größeren Schwenkwinkel zurücklegen als der Schwenkrahmen, wodurch eine Über- oder Untersetzung der Schwenkbewegung des Betätigungshebels zu der Schwenkbewegung des Schwenkrahmens hin bewirkt wird. Hierdurch kann der Schwenkrahmen beispielsweise mit einem geringeren Kraftaufwand aus der Zuführposition in die Rückführposition und wieder zurück geschwenkt werden. Durch das mit dem Betätigungshebel verbundene Getriebe wird die Schwenkbewegung des Betätigungshebels über- oder untersetzt in die Schwenkbewegung des Schwenkrahmens umgewandelt.

Besonders bevorzugt ist der Betätigungshebel um eine in Bezug auf das Entnahmestationsgestell oder den Schwenkrahmen ortsfeste erste Schwenkachse hin und her schwenkbar. Das Getriebe kann einen Schwenkhebel aufweisen, der um eine in Bezug auf das Entnahmestationsgestell ortsfeste zweite Schwenkachse schwenkbar ist, die von der ersten Schwenkachse beabstandet ist. Die erste und zweite Schwenkachse können z. B. parallel zueinander angeordnet sein. Durch die beabstandete Anordnung der Schwenkachsen kann z. B. der Betätigungshebel an einem anderen Ort angeordnet sein als das Getriebe. Z. B. kann der Betätigungshebel am entnahmeseitigen Ende der Entnahmestation angeordnet sein, wobei das Getriebe allgemein zwischen dem Betätigungshebel und dem zur Zuführstation hin weisenden Ende der Entnahmestation, insbesondere im Bereich des zur Zuführstation weisenden Endes der Entnahmestation, angeordnet sein kann. Hierdurch spart sich die Bedienperson Weg, den sie z. B. zurücklegen müsste, wenn die Schwenkachse des Betätigungshebels der Schwenkachse des Schwenkhebels des Getriebes entspräche.

Bevorzugt ist der Betätigungshebel über ein Gestänge mit dem Getriebe oder dem Schwenkhebel des Getriebes verbunden. Das Gestänge kann z. B. eine Zug- und Schubstange sein, welche gelenkig, insbesondere schwenkbar mit dem Betätigungshebel verbunden ist. Die gelenkige Verbindung zwischen Betätigungshebel und dem Gestänge ist vorzugsweise von der ersten Schwenkachse beabstandet. Der Schwenkhebel ist vorzugsweise gelenkig, insbesondere schwenkbar mit dem Gestänge verbunden, wobei die gelenkige Verbindung beabstandet von der zweiten Schwenkachse ist.

Optional kann an dem Schwenkhebel des Getriebes wenigstens eine Rolle drehbar angeordnet sein, die an dem Schwenkrahmen, insbesondere an einer an dem Schwenkrahmen gebildeten Abrollfläche abrollen kann oder abrollt, wenn der Schwenkhebel relativ zu dem Entnahmestationsgestell geschwenkt wird. Alternativ kann an dem Schwenkhebel ein Gleitstück, wie z. B. aus einem reibungsarmen Kunststoff, wie z. B. Teflon oder POM oder dergleichen gebildet sein, der an dem Schwenkrahmen oder an einer Gleitfläche des Schwenkrahmens entlanggleitet, wenn der Schwenkhebel relativ zu dem Entnahmestationsgestell geschwenkt wird.

Insbesondere sind Schwenkachse des Schwenkhebels und die Schwenkachse des Schwenkrahmens voneinander beabstandet.

Alternativ kann das Getriebe einen Kniehebelmechanismus aufweisen, der einen ersten Schwenkhebel, der um eine in Bezug auf das Entnahmestationsgestell ortsfeste Schwenkachse, insbesondere die zweite Schwenkachse, schwenkbar ist und einen zweiten Schwenkhebel aufweisen, der um eine in Bezug auf den Schwenkrahmen ortsfeste Schwenkachse schwenkbar ist, wobei eine Schwenkbewegung des Betätigungshebels eine Schwenkbewegung des ersten und zweiten Schwenkhebels um seine jeweilige Schwenkachse bewirkt. Z. B. kann das Gestänge gelenkig mit dem Kniehebelmechanismus verbunden sein, insbesondere zwischen dem ersten Schwenkhebel oder dem zweiten Schwenkhebel oder der Schwenkachse des ersten Schwenkhebels und der Schwenkachse des zweiten Schwenkhebels. Insbesondere kann das Gestänge gelenkig mit dem ersten Schwenkhebel oder dem zweiten Schwenkhebel verbunden sein.

Allgemein kann ein Schwenkanschlag vorgesehen sein, an den der Schwenkhebel, insbesondere der erste oder zweite Schwenkhebel oder der Schwenkhebel mit der Rolle oder dem Gleitstück anschlägt, wenn der Schwenkhebel in einer Position ist, die bewirkt, dass der Schwenkrahmen in seiner Zuführungsposition ist. Der Anschlag definiert für den Schwenkhebel eine Endposition, wenn der Schwenkhebel in eine Richtung geschwenkt wird, die bewirkt, dass der Schwenkrahmen aus der Rückführposition in die Zuführposition geschwenkt wird. Anders ausgedrückt wird der Schwenkhebel zu dem Anschlag hin geschwenkt, wenn der Schwenkrahmen in eine Zuführposition geschwenkt wird, und von dem Anschlag weggeschwenkt, wenn der Schwenkrahmen in seine Rückführposition geschwenkt wird.

Z. B. kann sich der Schwenkrahmen über den oder mindestens einen der genannten Schwenkhebel an dem Entnahmestationsgestell abstützten. Insbesondere können der Schwenkhebel, der Schwenkrahmen und der Anschlag so zueinander angeordnet sein, dass die auf den Schwenkhebel wirkende Gewichtskraft des Schwenkrahmens den Schwenkhebel gegen den Anschlag drückt, wenn der Schwenkrahmen in seiner Zuführposition ist. Hierdurch wird vorteilhaft bewirkt, dass die Gewichtskraft des Schwenkrahmens ein selbsttätiges Lösen des Schwenkhebels, d. h. Wegschwenken des Schwenkhebels von dem Anschlag verhindert. Durch Betätigung des Betätigungshebels kann der Schwenkhebel von dem Anschlag wegbewegt oder weggeschwenkt werden, wobei beim Wegschwenken ein Totpunkt überschritten wird, ab dem die Gewichtskraft des Schwenkrahmens ein Verschwenken des Schwenkhebels von dem Anschlag weg bewirkt.

Wenn sich der Schwenkrahmen in seiner Zufuhrposition befindet, kann ein Verschwenken des Betätigungshebels in eine Richtung, welches ein Verschwenken des Schwenkrahmens in seine Rückführposition bewirkt, zunächst ein Verschwenken des Schwenkrahmens in die von der Rückführposition wegweisende Schwenkrichtung bewirken und erst dann ein Verschwenken in Richtung der Rückführposition bewirken. Wird der Schwenkhebel von seinem Anschlag wegbewegt, wird der Schwenkrahmen bis zum Erreichen des Totpunkts des Schwenkhebels minimal angehoben und nach Überschreiten des Totpunkts abgesenkt.

In bevorzugten Ausführungen umfasst die Rollenbahn, insbesondere die Entnahmestation, eine Feder, die so angeordnet ist, dass sie beim Verschwenken des Schwenkrahmens in die Rückführposition gespannt und beim Schwenken des Schwenkrahmens in die Entnahmeposition entspannt wird. Dadurch wird bewirkt, dass die Feder der Schwenkbewegung des Schwenkrahmens in die Rückführposition entgegenwirkt und das Schwenken des Schwenkrahmens in die Entnahmeposition unterstützt. Hierdurch wird die Kraft, die die Bedienperson für das Betätigen des Betätigungshebels aufwenden muss, verringert.

Zum Beispiel kann die Rollenbahn, insbesondere die Entnahmestation einen Dämpfer aufweisen, der so angeordnet ist, dass er die Schwenkbewegung des Schwenkrahmens in die Rückführposition dämpft. Der Vorteil hierbei ist, dass der Schwenkrahmen abgebremst in die Rückführposition bewegt wird, selbst wenn die Bedienperson den Betätigungshebel loslassen sollte und der Totpunkt überschritten ist.

Die Feder und der Dämpfer können z. B. als kombinierte Einheit, wie z. B. als Feder-Dämpfer-Element, insbesondere in der Gestalt einer Gasdruckfeder mit integriertem Dämpfer ausgestaltet sein. Der Dämpfer und/oder die Feder können sich jeweils an dem Entnahmegestell und dem Schwenkrahmen abstützen. Insbesondere können der Dämpfer und/oder die Feder in der Gestalt eines Linearzylinders ausgestaltet sein.

In Vorteilhaften Weiterbildungen umfasst die Rollenbahn ein an der Zuführstation angeordnetes Trennglied, welches aus einer Position unterhalb der ersten Transportebene in eine Position oberhalb der ersten Transportebene bewegbar, insbesondere schwenkbar ist, so dass das Trennglied in der Position oberhalb der ersten Transportebene eine Bewegung einer in der Zuführstation befindlichen Palette in Richtung Entnahmestation blockiert und in der Position unterhalb der ersten Transportebene eine Bewegung dieser Palette in Richtung Entnahmestation freigibt. Die das Trennglied umfassende Trennvorrichtung kann z. B. ein Betätigungsglied aufweisen, welches mit dem Trennglied so gekoppelt ist, dass das Trennglied mittels Betätigung des Betätigungsglieds aus der Position oberhalb der ersten Transportebene in die Position unterhalb der ersten Transportebene bewegbar ist oder bewegt wird. Z. B. kann das Betätigungsglied ein weiterer Betätigungshebel oder ein Pedal sein, welches so angeordnet sein kann, dass es die Bedienperson mit ihrem Fuß auf eine einfache Weise betätigen kann. Die Betätigung des Betätigungsglieds bewirkt, dass die Palette aus der Zuführstation in die Entnahmestation transportiert wird, insbesondere durch die Schwerkraft oder im Speziellen die Hangabtriebskraft, welche durch die Schwerkraft bewirkt wird. Insbesondere kann das Betätigungsglied am entnahmeseitigen Ende der Entnahmestation angeordnet sein. Z. B. kann das Betätigungsglied mittels einer Zug- und Schubstange mit dem Trennglied verbunden sein oder zumindest so gekoppelt sein, dass die Betätigung des Betätigungsglieds bewirkt, dass das Trennglied für eine Bewegung unter die Transportebene freigegeben wird, wobei das Trennglied z. B. durch die Schwerkraft unter die erste Transportebene bewegt wird.

Die Rollenbahn kann vorteilhaft eine Sperreinrichtung aufweisen, welche verhindert, dass das Trennglied in die Position unterhalb der ersten Transportebene bewegbar ist, wenn der Schwenkrahmen in der Rückführposition ist oder nicht in seiner Zuführposition ist. Beispielsweise kann der Schwenkrahmen einen Anschlag aufweisen, der so vor einem Gegenanschlag der Zug- und Schubstange angeordnet ist, dass der Anschlag die Bewegung der Zug- und Schubstange bei der Betätigung des Betätigungsglieds blockiert, wenn der Schwenkrahmen in der Rückführposition oder außerhalb der Zuführposition ist, wobei der Anschlag in Bezug auf den Gegenanschlag so angeordnet ist, dass die Zug- und Schubstange soweit bewegbar ist, dass das Trennglied abgesenkt wird, wenn der Schwenkrahmen in seiner Zuführposition ist. Der Anschlag kann z. B. ortsfest an dem Schwenkrahmen angeordnet sein. Insbesondere kann der Anschlag an einem Winkel, insbesondere Anschraubwinkel, oder einer Platte, insbesondere Anschraubplatte gebildet sein, der oder die mittels einer Schraubverbindung an dem Schwenkrahmen befestigt ist. Wenn der Schwenkrahmen in einer Zuführposition ist, kann der Gegenanschlag der Zug- und Schubstange an dem Anschlag vorbeibewegt werden.

In vorteilhaften Weiterbildungen umfasst die Rollenbahn eine Detektiereinrichtung, welche angepasst ist, zu detektieren, ob die Palette beladen oder/und entladen ist, und welche so mit einer Blockiereinrichtung gekoppelt ist, dass die Blockiereinrichtung ein Verschwenken des Schwenkrahmens freigibt, wenn die Palette entladen ist, und blockiert, wenn die Palette beladen ist.

Insbesondere ist die Schwerkraftbahn der Rückführstation, welche die zurückgeführte oder rückzuführende Palette aufnehmen kann, kinematisch von dem Schwenkrahmen entkoppelt. Hierdurch wird vorteilhaft bewirkt, dass ein Verschwenken des Schwenkrahmens kein Verschwenken der Schwerkraftbahn der Rückführstation bewirkt. In der WO 98/13280 A1 ist die Rückführstation derart kinematisch mit der Kommissionierstation verbunden, dass ein Verschwenken der Kommissionierstation ein Verschwenken der Rückführstation bewirkt. Dieser Mechanismus ist verhältnismäßig aufwendig. Durch die kinematische Entkopplung kann die Rollenbahn weniger aufwendig und daher wirtschaftlicher gefertigt werden.

Die Erfindung wurde anhand mehrerer vorteilhafter Ausführungsformen beschrieben. Im Folgenden wird eine besonders bevorzugte Ausführungsform der Erfindung anhand von Figuren beschrieben. Die dabei offenbarten Merkmale bilden den Gegentand des Anspruchs 1 in jeglicher Merkmalskombination, auch mit den oben beschriebenen Merkmalen vorteilhaft weiter. Es zeigen:
- Figur 1: eine Rollenbahn in einer Seitenansicht,
- Figur 2: die Rollenbahn aus Figur 1 in einer Draufsicht,
- Figur 3: ein Detail der Rollenbahn aus den vorhergehenden Figuren in einer Seitenansicht, die der Seitenansicht aus Figur 1 gegenüberliegt, wobei die Bewegung einer Zug- und Schubstange freigegeben ist und
- Figur 4: die Ansicht aus Figur 3, wobei die Bewegung der Zug- und Schubstange blockiert ist.

Die Rollenbahn umfasst eine Zuführstation 10, eine Entnahmestation 20 und eine Rückführstation 30, wobei die Rückführstation 30 unterhalb der Zuführstation 10 angeordnet ist.

Die Zuführstation umfasst ein Zuführstationsgestell 1a, 11, welches quer zu einer Transportrichtung einer Palette P angeordnete Träger, wie z. B. Profilträger 1a und in Transportrichtung verlaufende Schienen 11 aufweist, die in dem gezeigten Beispiel mit den Profilträgern 1a verschraubt sind. Die Schienen 11, wie z. B. drei Schienen, lagern jeweils mehrere Transportrollen 12 drehbar. Die gemeinsam an die Umfänge der Transportrollen 12 tangierende Ebene bildet eine erste Transportebene 13. Die auf den Transportrollen 12 aufliegende Palette P ist entlang der Transportebene 13 derart transportierbar, dass die Transportrollen 12 an der Palette 13 abrollen. Die Schienen 11 weisen in dem gezeigten Beispiel eine U-Profilform auf, wobei zwischen den Schenkeln des U-Profils die Transportrollen 12 der jeweiligen Schiene 11 drehbar angeordnet sind.

Die Transportebene 13 ist in Bezug auf die Horizontale mit einem leichten Gefälle von z. B. in etwa 3°, zur Entnahmestation 20 hin abfallend angeordnet. Gleiches gilt insbesondere für die Schienen 11. Die so gebildete Schwerkraftrollenbahn erlaubt, dass die Palette P durch die von der Neigung und der Schwerkraft verursachte Hangabtriebskraft von der Zuführstation 10 in die Entnahmestation 20 transportierbar ist.

Die Zuführstation 10 weist wenigstens eine Falle 14 auf, die schwenkbar an mindestens einer der Schienen 11 angeordnet ist und von der Palette P entlang der Transportebene 13 in hangabwärtiger Richtung überfahrbar ist und die eine Bewegung der Palette P in hangaufwärtiger Richtung blockiert. Die Falle 14 weist einen über der Transportebene angeordneten Teil und einen unter der Transportebene 13 angeordneten Teil auf, wobei der über der Transportebene 13 angeordnete Teil beim Überfahren von der Palette P unter die Transportebene 13 gedrückt wird und, wenn die Palette P die Falle 14 vollständig überfahren hat, durch die Schwerkraft zurückgeschwenkt wird, so dass ein Teil der Falle 14 wieder über der Transportebene 13 angeordnet ist, wobei der unterhalb der Transportebene 13 angeordnete Teil gegen einen Anschlag anschlägt. Beim Versuch die Palette P entgegen die Transportrichtung zu verschieben, schlägt die Palette P an dem über der Transportebene 13 angeordneten Teil der Falle 14 an, wobei der unter der Transportebene 13 angeordnete Teil der Falle 14 gegen den Anschlag gedrückt wird, wodurch eine Verschiebung der Palette P entgegen die Transportrichtung blockiert wird.

Die Entnahmestation 20 weist ein Entnahmestationsgestell 1b auf, welches quer zur Transportrichtung verlaufende Querträger 1b und ein Halteprofil für einen Betätigungshebel 44 und für eine Schwenkachse 25 bildet.

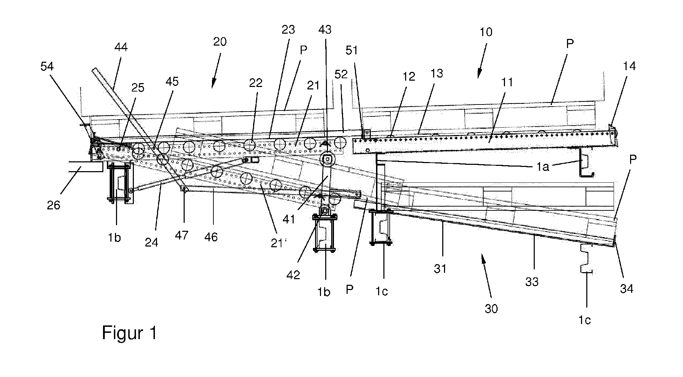

Die Entnahmestation 20 weist einen Schwenkrahmen 21 auf, der zwei Schienen umfasst, zwischen denen mehrere Tragrollen 22 drehbar angeordnet sind, wodurch eine Schwerkraftrollenbahn gebildet wird. Die an die Umfänge der Tragrollen 22 tangierende Ebene bildet eine zweite Transportebene 23, entlang der die Palette P transportierbar ist. Der Schwenkrahmen 21 ist zwischen einer Zuführposition (obere Position in Figur 1) und einer Rückführposition (untere Position in Figur 1) um die in Bezug auf das Entnahmestationsgestell 1b ortsfeste Schwenkachse 25 hin und her schwenkbar. Die Schwenkachse 25 ist parallel zu der zweiten Transportebene 23 und senkrecht zu der Transportrichtung der Palette P angeordnet. Vorzugsweise ist an der Entnahmestation 20 ein Schwenkanschlag (nicht gezeigt) gebildet, an dem der Schwenkrahmen 21 in seiner Rückführposition anschlägt. Zwischen dem Entnahmestationsgestell 1b, insbesondere an dem Querträger und dem Schwenkrahmen 21 ist eine als Feder-Dämpfer-Element dienende Gasdruckfeder 24 angeordnet, welche das Verschwenken des Schwenkrahmens 21 in die Rückführposition dämpft und das Verschwenken in die Zuführposition unterstützt.

Die zweite Transportebene 23 steigt gegenüber der Horizontalen zur Zuführstation 10 hin an, wenn sich der Schwenkrahmen 21 in seiner Zuführposition befindet und fällt zu der Rückführstation 30 hin ab, wenn sich der Schwenkrahmen 21 in seiner Rückführposition befindet (Bezugszeichen 21'). Alternativ kann die zweite Transportebene 23 parallel zur Horizontalen sein, wenn sich der Transportrahmen 21 in seiner Zuführposition befindet.

Die Rückführstation 30 bildet eine dritte Transportebene 33, die von zwei seitlich verlaufenden Profilschienen 31 gebildet werden. Wenngleich die Rückführstation 30 ebenfalls Transportrollen aufweisen kann, ist es vorteilhaft, die Rückführstation 30 ohne Transportrollen auszugestalten, insbesondere mit als Gleitschienen dienende Schienen oder Profilschienen 31 zu versehen, da dies wesentlich kostengünstiger ist. Die Gleit- oder Profilschienen 31 sind fest, d. h. unbewegbar mit einem Rückführstationsgestell 1c verbunden, wie z. B. verschraubt. Die dritte Transportebene 33 steigt zu der Entnahmestation 20 hin an. An dem abfallenden Ende weist die Rückführstation 30, insbesondere mindestens eine der Profilschienen 31, einen Endanschlag 34 auf, gegen den die Palette P anschlägt, wenn sie vollständig in die Rückführstation 30 transportiert wurde. Allgemein ist die dritte Transportebene 33 in Bezug auf die Horizontale stärker geneigt als die erste Transportebene 13. Beispielsweise kann die dritte Transportebene 33 in Bezug auf die Horizontale zwischen 8° bis 15°, wie z. B. in etwa 10° geneigt sein.

In dem gezeigten Beispiel sind das Zuführstationsgestell 1a und die Profilschienen 31 so zueinander angeordnet, dass die in der Rückführstation 30 befindliche Palette P an dem nach unten geneigten Ende in etwa bis in eine waagrechte Position, d. h. in etwa parallel zur Horizontalen angehoben und aus der Rückführstation 30 entnommen werden kann.

Wenn der Schwenkrahmen 21 in seiner Zuführposition ist, fluchten die erste und zweite Transportebene 13, 23 in etwa miteinander. Wenn der Schwenkrahmen 21 in seiner Rückführposition ist, fluchten die zweiten und dritten Transportebenen 23, 33 in etwa miteinander.

Die Rollenbahn umfasst ferner eine Trenneinrichtung 51, 52, 54, welche ein an der Zuführstation schwenkbar befestigtes Trennglied 51 aufweist, welches zwischen einer Position oberhalb der Förderebene 13 und einer Position unterhalb der Förderebene 13 hin und her schwenkbar ist. Wenn das Trennglied 51 oberhalb der Förderebene 13 angeordnet ist, bildet es einen Anschlag, der verhindert, dass die in der Zuführstation 10 befindliche Palette P zu der Entnahmestation 20 hin transportiert wird. Wenn das Trennglied 51 unterhalb der ersten Förderebene 13 angeordnet ist, gibt es die Bewegung der Palette P zu der Entnahmestation 20 hin frei.

Das Trennglied 51 kann z. B. geführt hin und her verschwenkt werden oder z. B. aufgrund der Schwerkraft verschwenkt werden. Ein geeigneter Verschwenkmechanismus wird z. B. in der DE 20 2011 005 138 U1 gezeigt.

An dem entnahmeseitigen Ende der Entnahmestation 20 ist ein Pedal 54 angebracht, welches über eine Zug- und Schubstange 52 mit dem Trennglied 51 gekoppelt ist. Eine Betätigung des Pedals 54 bewirkt, dass das Trennglied 51 nach unten geschwenkt wird Das Pedal 54 ist für die Betätigung um eine Pedalschwenkachse, die z. B. ortsfert in Bezug auf das Entnahmestationsgestell 1b ist, schwenkbar. Die Zug- und Schubstange 52 ist gelenkig mit dem Pedal 54 verbunden, insbesondere um eine Schwenkachse, die von der Pedalschwenkachse beabstandet ist. Hierdurch wird bewirkt, dass die Zug- und Schubstange 52 entlang ihrer Längsrichtung verschoben wird, wenn das Pedal 54 bei dessen Betätigung um die Pedalschwenkachse geschwenkt wird.

Die Rollenbahn weist ferner mindestens einen Schwenkhebel 41, in diesem Beispiel zwei über eine Welle drehfest miteinander verbundene Schwenkhebel 41, auf, der um eine Schwenkachse 42 hin und her schwenkbar ist. An dem Schwenkhebel 41 ist eine Rolle 43 drehbar befestigt, an der der Schwenkrahmen 21 bzw. eine Abrollfläche des Schwenkrahmens 21 aufliegt.

Der Betätigungshebel 44, der um die in Bezug auf das Entnahmestationsgestell 1b ortsfeste Schwenkachse 45 schwenkbar ist, ist mit einer Zug- und Schubstange 46, welche gelenkig, insbesondere mit einer Schwenkachse 47, die von der Schwenkachse 45 beabstandet ist, verbunden. Die Zug- und Schubstange 46 ist ferner gelenkig, d. h. mit einer Schwenkachse mit dem Schwenkhebel 41 oder mit einem der zwei Schwenkhebel 41 verbunden. An dem Schwenkhebel 41 ist eine L-förmige Abragung gebildet, an der die Schwenkachse für die gelenkige Verbindung angeordnet ist. Hierdurch wird vorteilhaft bewirkt, dass zwischen dieser Schwenkachse und der Schwenkachse 42 ein hinreichend großer Abstand (Hebelarm) besteht, wenn der Schwenkhebel 41 in der Position ist, die bewirkt, dass der Schwenkrahmen 21 in seiner Rückführposition ist, so dass der Schwenkhebel 41 wieder zurückschwenkbar ist.

Der Schwenkhebel 41 ist gegenüber der Vertikalen leicht winkelversetzt, wobei ein Anschlag vorgesehen ist (nicht gezeigt) gegen den der Schwenkhebel 41 aufgrund der auf den Schwenkhebel 41 wirkenden Gewichtskraft des Schwenkrahmens 21 gedrückt wird. Soll der Schwenkrahmen 21 aus der Zuführposition in die Rückführposition bewegt werden, wird der Betätigungshebel 44 betätigt, d. h. in der Ansicht aus Figur 1 nach rechts geschwenkt, so dass die Zug- und Schubstange 46 nach links bewegt wird, wodurch der Schwenkhebel 41 zu dem entnahmeseitigen Ende der Entnahmestation 20 geschwenkt wird. Bei dieser Schwenkbewegung, bei der der Schwenkhebel 41 von dem Anschlag weggeschwenkt wird, überwindet der Schwenkhebel 41 seinen Totpunkt, d. h. überstreicht die Vertikale, wobei der Schwenkrahmen 21 hierbei um ein kleines Stück angehoben wird. Anschließend wird der Schwenkrahmen 21 in seine Rückführposition abgesenkt, insbesondere unter Mitwirkung des Feder-Dämpfer-Elements 24. Soll der Schwenkrahmen 21 in seine Zuführposition zurückgeschwenkt werden, wird der Betätigungshebel 44 in der Ansicht aus Figur 1 nach links geschwenkt, wodurch die Zug- und Schubstange 46 nach rechts bewegt wird, wodurch der Schwenkhebel 41 zu der Zuführstation 10 hin geschwenkt wird und kurz vor Erreichen des Anschlags den Totpunkt, insbesondere die Vertikale überstreicht und schließlich an dem Anschlag anschlägt.

An der Entnahmestation 20 ist ein begehbarer Boden 26 angeordnet, der vorgesehen ist, von der Bedienperson betreten zu werden, und der in Bezug auf das Pedal 54 so angeordnet ist, dass die Bedienperson das Pedal 54 bequem mit ihrem Fuß betätigen kann.

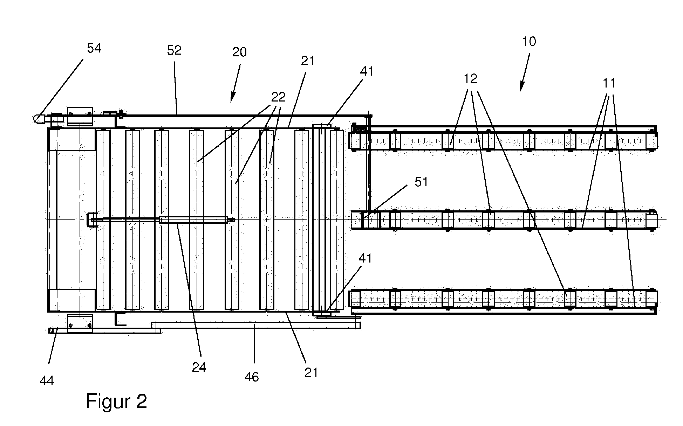

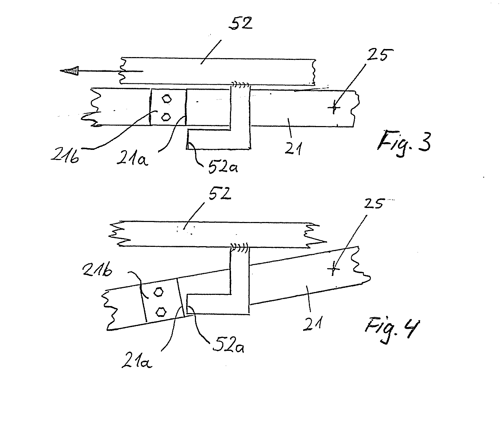

Wie am besten aus den Figuren 3 und 4 erkennbar ist, ist an dem Schwenkrahmen 21 ein ortsfester Anschlag 21 a angeordnet, der - wie hier beispielhaft dargestellt - von einer mit dem Schwenkrahmen 21 verschraubten Anschraubplatte 21b gebildet wird. Die Zug- und Schubstange 52 weist einen Gegenanschlag 52a auf, der von einem L-förmigen Winkel, der mit dem stangenförmigen Abschnitt der Zug- und Schubstange 52 verbunden, wie z. B. verschweißt oder verschraubt ist, gebildet ist. Wenn der Schwenkrahmen 21 in seiner Zuführposition ist (Figur 3), ist der Anschlag 21a in Bezug auf den Gegenanschlag 52a so angeordnet, dass der Gegenanschlag 52a an dem Anschlag 21a vorbeibewegbar ist, d.h. dass die Zug- und Schubstange 52 soweit bewegbar ist (Pfeilrichtung), dass das Trennglied 51 (Figuren 1 und 2) unter die Transportebene schwenkt. Der Anschlag 21a bzw. die Anschraubplatte 21b sind dabei zwischen dem Gegenanschlag 52a oder dem den Gegenanschlag 52a bildenden Schenkel des L-förmigen Winkels, und dem stangenförmigen Abschnitt der Zug- und Schubstange 52 angeordnet. Wenn der Schwenkrahmen 21 nicht in seiner Zuführposition ist (Figur 4), d.h. aus der Zuführposition um die Schwenkachse 25 verschwenkt ist, ist der Anschlag 21a in Bezug auf den Gegenanschlag 52a so angeordnet, dass eine Bewegung der Zug- und Schubstange 52 in die Richtung, die eine Bewegung des Trennglieds 51 unter die Transportebene bewirken würde, blockiert wird, d.h. dass der Gegenanschlag 52a an dem davor angeordneten Anschlag 21a anstößt. Somit werden ein Verschwenken des Trennglieds 51 unter die Transportebene und ein Nachführen der Platte P aus der Zuführstation 10 in die Entnahmestation 20 verhindert.

Bei der bestimmungsgemäßen Verwendung der Rollenbahn kann sich in der Zuführstation 10 eine beladene Palette P befinden. Ferner kann sich in der Entnahmestation 20 eine weitere beladene Palette P befinden. Die beladene Palette P der Entnahmestation 20 wird durch das Bedienpersonal entladen, wobei anschließend die Palette P in die Rückführstation 30 zurückgeführt wird. Dies geschieht durch Verschwenken des Hebels 44, wodurch der Schwenkrahmen 21 in seine Rückführposition schwenkt, wodurch die Palette P aus der Entnahmestation 20 durch die Schwerkraft in die Rückführstation 30 transportiert wird. Anschließend wird der Hebel 44 in die entgegengesetzte Richtung betätigt, so dass der Schwenkrahmen 21 in seine Zuführposition schwenkt. Anschließend wird das Pedal 54 betätigt, so dass das Trennglied 51 die Transportebene 13 schwenkt, wodurch die Palette P aus der Zuführstation in die Entnahmestation 20 rollt. Während das Bedienpersonal die in der Entnahmestation 20 befindliche Palette P entkommissioniert oder entlädt, wird eine weitere beladene Palette P in die Zuführstation 10 transportiert, wie z. B. mit einer Rollenbahn, einem Beladeroboter oder einem Gabelstapler. Ferner wird während des Entladens der Palette P der Entnahmestation 20 die entleerte Palette P aus der Rückführstation 30 entnommen. Wenn die Palette P der Entnahmestation 20 entleert ist, wird sie in der beschriebenen Weise in die Rückführstation 30 transportiert und der Gesamtvorgang beginnt von neuem.

## Patentansprüche

1. Rollenbahn mit Leerpalettenrückführung, umfassend:
a) eine Zuführstation (10), die ein Zuführstationsgestell (1a, 11) und relativ zu dem Zuführstationsgestell (1a, 11) drehbare Transportrollen (12) aufweist, wobei die Transportrollen (12) eine erste Transportebene (13) definieren,
b) eine Entnahmestation (20), die ein Entnahmestationsgestell (1b) und einen Schwenkrahmen (21), der eine zweite Transportebene (23) bildet, aufweist, wobei der Schwenkrahmen (21) relativ zu dem Entnahmestationsgestell (1b) um eine insbesondere parallel zu der zweiten Transportebene (23) verlaufende Schwenkachse (25) zwischen einer Zuführposition und einer Rückführposition hin und her schwenkbar ist, und
c) eine Rückführstation (30), die eine dritte Transportebene (33) aufweist,
d) wobei eine Palette (P) aus der Zuführstation (10) in die Entnahmestation (20) entlang der ersten und zweiten Transportebene (13, 23) transportierbar ist, wenn der Schwenkrahmen (21) in der Zuführposition ist, und aus der Entnahmestation (20) in die Rückführstation (30) entlang der zweiten und dritten Transportebene (23, 33) transportierbar ist, wenn der Schwenkrahmen (21) in der Rückführposition ist, wobei die zweite Transportebene (23) gegenüber der Horizontalen so stark geneigt ist, dass die Palette (P) von der Entnahmestation (20) mittels Schwerkraft in Richtung Rückführstation (30) transportiert wird,
**gekennzeichnet durch**
e) einen von einer Bedienperson greifbaren Betätigungshebel (44), der relativ zu dem Schwenkrahmen (21) schwenkbar und mit einem Getriebe (41, 43, 46) verbunden ist, welches die Schwenkbewegung des Betätigungshebels (44) in eine Bewegung umwandelt, welche die Schwenkbewegung des Schwenkrahmens (21) bewirkt.

2. Rollenbahn nach Anspruch 1, **dadurch gekennzeichnet, dass** der Betätigungshebel (44) um eine in Bezug auf das Entnahmestationsgestell (1b) oder den Schwenkrahmen (21) ortsfeste erste Schwenkachse (45) hin und her schwenkbar ist und das Getriebe (41, 43, 46) einen Schwenkhebel (41) aufweist, der um eine in Bezug auf das Entnahmestationsgestell (1b) ortsfeste zweite Schwenkachse (42) schwenkbar ist, wobei die erste Schwenkachse (45) und die zweite Schwenkachse (42) voneinander beanstandet sind.

3. Rollenbahn nach Anspruch 1 oder 2, **dadurch gekennzeichnet, dass** der Betätigungshebel (44) über ein Gestänge (46) mit einem Schwenkhebel (41) des Getriebes (41, 43, 46) verbunden ist.

4. Rollenbahn nach einem der Ansprüche 1 bis 3, **dadurch gekennzeichnet, dass** das Getriebe (41, 43, 46) einen Schwenkhebel (41) umfasst, an dem wenigstens eine Rolle (43) drehbar angeordnet ist, wobei die Rolle auf einer Fläche des Schwenkrahmens (21) abrollt.

5. Rollenbahn nach einem der Ansprüche 1 bis 3, **dadurch gekennzeichnet, dass** das Getriebe (41, 43, 46) einen Kniehebelmechanismus mit einem ersten Schwenkhebel, der um eine in Bezug auf das Entnahmestationsgestell ortsfeste Schwenkachse schwenkbar ist, und einem zweiten Schwenkhebel, der um eine in Bezug auf den Schwenkrahmen ortsfeste Schwenkachse schwenkbar ist, wobei eine Schwenkbewegung des Betätigungshebels (44) eine Schwenkbewegung des ersten und zweiten Schwenkhebels um seine jeweilige Schwenkachse bewirkt.

6. Rollenbahn nach einem der Ansprüche 1 bis 5, **dadurch gekennzeichnet, dass**, wenn sich der Schwenkrahmen (21) in seiner Zuführposition befindet, ein Verschwenken des Betätigungshebels (44) in eine Richtung, welches ein Verschwenken des Schwenkrahmens (21) in seine Rückführposition bewirkt, zunächst ein Verschwenken des Schwenkrahmens (21) in die von der Rückführposition wegweisende Schwenkrichtung bewirkt und erst dann ein Verschwenken in Richtung der Rückführposition bewirkt.

7. Rollenbahn nach einem der Ansprüche 1 bis 6, **dadurch gekennzeichnet, dass** die Rückführstation (30) eine insbesondere nichtschwenkbare Schwerkraftbahn aufweist, die gegenüber der Horizontalen in Richtung Entnahmestation (20) ansteigend geneigt ist.

8. Rollenbahn nach einem der Ansprüche 1 bis 7, **gekennzeichnet durch** eine Feder (24), die so angeordnet ist, dass sie beim Schwenken des Schwenkrahmens (21) in die Rückführposition gespannt und in die Entnahmeposition entspannt wird.

9. Rollenbahn nach einem der Ansprüche 1 bis 8, **gekennzeichnet durch** einen Dämpfer (24), der so angeordnet ist, dass es die Schwenkbewegung des Schwenkrahmens (21) in die Rückführposition dämpft.

10. Rollenbahn nach einem der Ansprüche 1 bis 9, **gekennzeichnet durch** ein an der Zuführstation angeordnetes Trennglied (51), welches aus einer Position unterhalb der ersten Transportebene (13) in eine Position oberhalb der ersten Transportebene (13) bewegbar, insbesondere schwenkbar ist, so dass das Trennglied (51) in der Position oberhalb der ersten Transportebene (13) eine Bewegung der Palette (P) in Richtung Entnahmestation (20) blockiert und in der Position unterhalb der ersten Transportebene (13) eine Bewegung der Palette (P) in Richtung Entnahmestation (20) freigibt.

11. Rollenbahn nach Anspruch 10, **gekennzeichnet durch** ein - insbesondere an der Entnahmestation (20) angeordnetes - Betätigungsglied (54), welches mit dem Trennglied (51) so gekoppelt ist, dass das Trennglied (51) mittels Betätigung des Betätigungsglieds (54) aus der Position oberhalb der ersten Transportebene (13) in die Position unterhalb der ersten Transportebene (13) bewegbar ist oder bewegt wird.

12. Rollenbahn nach Anspruch 10 oder 11, **gekennzeichnet durch** eine Sperreinrichtung, welche verhindert, dass das Trennglied (51) in die Position unterhalb der ersten Transportebene (13) bewegbar ist, wenn der Schwenkrahmen (21) in der Rückführposition ist oder/und nicht in seiner Zuführposition ist.

13. Rollenbahn nach einem Ansprüche 1 bis 12, **gekennzeichnet durch** eine Detektiereinrichtung, welche angepasst ist, zu detektieren, ob die Palette (P) beladen oder/und entladen ist, und welche so mit einer Blockiereinrichtung, gekoppelt ist, dass die Blockiereinrichtung ein Verschwenken des Schwenkrahmens (21) freigibt, wenn die Palette (P) entladen ist, und blockiert, wenn die Palette (P) beladen ist.

14. Rollenbahn nach einem der Ansprüche 1 bis 13, **dadurch gekennzeichnet, dass** das die Palette (P) aufnehmende Schwerkraftbahn der Rückführstation (30) kinematisch von dem Schwenkrahmen (21) entkoppelt ist.
